# FASCICULE DE BREVET EUROPEEN

(11) **EP 2 625 557 B1**
(45) Date de publication et mention de la délivrance du brevet: **29.09.2021**
(21) Numéro de dépôt: 11779795.1
(22) Date de dépôt: 04.10.2011
(51) Int. Cl.: G02B 6/36, G01S 7/481, G01S 17/95, G02B 6/32, G02B 7/00

(54) **TÊTE OPTIQUE POUR EFFECTUER UNE MESURE ATMOSPHÉRIQUE, SYSTÈMES ET PROCÉDÉS DE FABRICATION ASSOCIÉS.**
OPTISCHES KOPFENDE ZUR ATMOSPHÄRISCHEN MESSUNG UND ZUGEHÖRIGE ANLAGEN UND HERSTELLUNGSVERFAHREN
OPTICAL HEAD FOR ATMOSPHERIC MEASUREMENT, RELATED SYSTEMS AND MANUFACTURING METHODS

(30) Priorité: 04.10.2010 FR 1058032
(43) Date de publication de la demande: 14.08.2013
(73) Titulaire: Leosphere, 75008 Paris (FR)
(72) Inventeur: LALEU, Nicolas, 91300 MASSY (FR); PARMENTIER, Rémy, 92210 SAINT-CLOUD (FR)
(74) Mandataire: IPAZ
(86) Numéro de dépôt international: PCT/FR2011/052317
(87) Numéro de publication internationale: WO 2012/045976

(56) Documents cités:
- DE-A1- 4 120 429
- DE-B3-102004 058 260
- FR-A1- 2 820 789
- JP-A- 2009 139 905
- US-A- 5 281 807
- US-A1- 2005 083 513
- US-A1- 2006 262 324
- US-A1- 2010 067 123
- DOMNICK J ET AL: "A miniaturized semiconductor fibre optic phase-Doppler anemometer (DFPDA) with applications to liquid sprays", MEASUREMENT SCIENCE AND TECHNOLOGY, IOP, BRISTOL, GB, vol. 4, no. 3, 1 March 1993 (1993-03-01), pages 411-415, XP020065423, ISSN: 0957-0233, DOI: 10.1088/0957-0233/4/3/024

## Description

### Domaine technique

La présente invention concerne une tête optique pour effectuer une mesure atmosphérique, une telle tête optique pouvant par exemple être utilisée dans un appareil de mesure basé sur la technologie LIDAR (acronyme pour « Light Detection and Ranging »).

La présente invention concerne aussi un système d'émission et réception comprenant une telle tête optique, ainsi qu'un procédé de fabrication associé à cette tête optique.

Le domaine de l'invention est plus particulièrement mais de manière non limitative celui des appareils de mesure basés sur la technologie LIDAR (on parle communément, simplement de LIDAR).

### Etat de la technique antérieure

On connaît dans l'art antérieur des LIDARs aptes à mesurer au minimum dans trois directions de l'espace.

On peut parler d'un point de mesure pour désigner une mesure dans une direction donnée et à une distance donnée du LIDAR.

Il s'agit notamment des LIDARs qui sont utilisés pour mesurer les caractéristiques d'une vitesse du vent, en exploitant le déplacement des particules dans l'atmosphère. En effet, le mouvement des particules dans l'air, portées par le vent, induit un décalage Doppler de la fréquence d'un faisceau laser de mesure, proportionnel à la vitesse du vent. Pour reconstituer le profil du vent à la verticale du LIDAR, le LIDAR doit mesurer la direction et les vitesses horizontale et verticale.

On peut parler de vent vertical et de vent horizontal. Le premier correspond à la composante du vent selon l'axe vertical dans le repère Galiléen. Le second correspond à la composante du vent selon le plan horizontal dans le repère Galiléen.

Chaque LIDAR comprend :
- une source laser qui émet un faisceau de mesure
- au moins un télescope, qui peut servir à la mise en forme du faisceau de mesure et la focalisation (éventuellement à différentes altitudes) de ce faisceau de mesure.

Selon un premier mode de réalisation connu, le LIDAR comprend des moyens de balayage (on parle aussi de « scanner »), pour mesurer au moins trois directions non colinéaires afin de pouvoir reconstruire par résolution d'équations trigonométriques la vitesse du vent. La tête optique d'un tel LIDAR comprend un unique logement, apte à recevoir un unique télescope. D'un côté du télescope se trouve une source laser produisant un faisceau de mesure, le télescope focalisant le faisceau de mesure à une distance voulue de la tête optique. De l'autre côté du télescope se trouvent des moyens de balayage formés par un prisme de déviation monté sur un moteur à arbre creux. Le moteur à arbre creux entraîne le prisme de déviation en rotation. La rotation du prisme de déviation induit un balayage du faisceau de mesure, selon un cône. On peut ainsi diriger le faisceau de mesure alternativement selon plusieurs directions de mesure, c'est-à-dire selon plusieurs lignes de visée.

Selon une variante de ce dispositif, les moyens de balayage consistent en un premier miroir de renvoi monté sur un premier moteur à arbre creux, suivi d'un second miroir de renvoi monté sur un second moteur à arbre creux. Les deux miroirs de renvoi, montés à 45° de l'axe optique du télescope, permettent de couvrir une zone de balayage équivalente à une demi-sphère.

Le positionnement angulaire des directions de mesure doit cependant être très précis. Une précision de plus ou moins 0,1° est par exemple appréciée,

Or, un tel dispositif, dans ses deux variantes, fait appel à des moteurs qui ne permettent pas d'obtenir de façon fiable une telle précision, ou très difficilement. Il faut alors réviser les moteurs régulièrement. Il faut les faire fonctionner dans une gamme de température et d'humidité contrôlée, ce qui nécessite la mise en œuvre de systèmes de régulation. Il faut s'assurer que les moteurs ne dérivent pas dans le temps, ce qui pourrait introduire lors de la reconstitution du vent, des erreurs sur la mesure (erreur à la fois sur la direction et sur la vitesse du vent). Concernant la variante qui met en œuvre deux moteurs, un outillage assez lourd doit être mis en place pour contrôler l'alignement des miroirs afin de garantir l'angle de balayage. Cette même variante présente en outre de nombreux problèmes d'utilisation liés aux basses températures, du fait que le second moteur est à l'extérieur de l'unique logement du LIDAR. Le système d'étanchéité est alors assez complexe, et de nombreuses pièces d'usure telles que des joints tournants fragilisent le LIDAR. Par ailleurs, le coût des moteurs augmente sensiblement le prix de reviens d'un LIDAR.

Selon un autre mode de réalisation connu, la tête optique d'un LIDAR comprend autant de logements que de directions de mesure, chaque logement recevant son propre télescope et présentant d'un côté sa propre source laser. Il y a donc autant de sources laser que de directions à mesurer pour la reconstruction du vent.

Un tel mode de réalisation permet de s'affranchir des moteurs, et de gagner ainsi en précision et surtout en fiabilité du balayage.

Un tel mode de réalisation exige que le positionnement dans l'espace des logements soit extrêmement précis. En particulier, la distance du télescope par rapport à la source laser, mais aussi son orientation dans l'espace et par rapport à un référentiel donné, doivent être parfaitement maîtrisée.

La distance du télescope par rapport à la source laser détermine la position d'un point de mesure correspondant et utilisé pour la reconstruction du vent.

L'orientation du télescope dans l'espace et par rapport à un référentiel donné détermine une direction de mesure.

Une erreur sur la position d'un point de mesure entraîne une erreur importante dans la reconstruction du vent.

Une erreur sur la direction de mesure entraîne une erreur importante dans la reconstruction du vent.

Or, les têtes optiques selon ce mode de réalisation, connues dans l'art antérieur, ne permettent pas de maîtriser à faible coût, la position des points de mesure et la direction de mesure, en environnement sévère.

Le document DE 41 20 429 A1 décrit une douille comprenant un manchon à l'intérieur duquel est logé un insert. L'insert comprend un alésage usiné de manière à garantir la concentricité de la fibre optique par rapport à la douille.

Le document US 2006/262324 A1 décrit un système d'émission et réception d'un faisceau laser comprenant une tête optique agencée pour diriger le faisceau laser à l'émission et à la réception.

Le document US 2010/067123 A1 décrit un imageur pour un dispositif de collage. L'imageur comprend une tête optique comportant des supports facilement usinables pour ajuster la position des composants optiques.

Le document JP 2009 139905 A décrit un composant de fixation d'un élément optique. L'élément optique est fixé sur une monture par une soudure.

Un but de la présente invention est donc de proposer une tête optique réalisable de façon particulièrement simple et économique, et ne présentant pas les inconvénients de l'art antérieur.

Un autre objectif de la présente invention est de proposer un système d'émission et réception comprenant cette tête optique, et un procédé de fabrication d'une telle tête optique.

### Exposé de l'invention

Cet objectif est atteint avec une tête optique selon la revendication 1.

Une mesure atmosphérique peut consister à mesurer une vitesse du vent, en particulier un profil de vitesse du vent, c'est-à-dire les composantes selon deux ou trois axes de la vitesse du vent, au-dessus, en amont ou en aval de la tête optique.

Le système optique réfractif peut être un télescope.

La fibre optique d'émission et réception peut amener un faisceau lumineux issu d'une source lumineuse jusqu'à la sortie de la fibre optique d'émission et réception.

L'axe d'un faisceau de sortie de la fibre optique d'émission et réception peut être l'axe de propagation du faisceau en sortie de la fibre optique d'émission et réception.

Chaque couple {système optique réfractif, fibre optique d'émission et réception} définit une ligne de visée.

Une ligne de visée peut être la direction dans l'atmosphère d'un faisceau issu de la fibre optique d'émission et réception et ayant traversé le système optique réfractif.

La tête optique est dite formée d'un seul tenant. Elle est monobloc, mais il peut s'agir d'un assemblage de plusieurs pièces maintenues solidaires.

La tête optique est formée rigide.

Les plusieurs pièces maintenues solidaires sont fixes les unes par rapport aux autres.

L'insert d'ajustement métallique peut être en aluminium, en laiton, en bonze, en acier, etc.

L'enveloppe externe garantit la stabilité mécanique de la tête optique, en particulier à l'égard des variations de température et des vibrations mécaniques.

L'insert d'ajustement permet un usinage simple et peu coûteux de la tête optique, en particulier pour rattraper des erreurs de centrage, de positionnement dans l'espace, etc.

Ledit unique axe peut définir l'axe mécanique d'un logement selon l'invention.

On peut garantir le positionnement de cet unique axe par rapport à un axe de référence prédéterminé.

On peut ainsi positionner précisément dans l'espace une ligne de visée correspondante.

L'axe de référence peut être fixe dans un référentiel donné, référentiel dans lequel la tête optique est fixe lorsqu'on effectue une mesure. Il peut s'agir du référentiel galiléen, dans le cas où la tête optique est utilisée au sol. Il peut s'agir d'un référentiel lié à un élément d'une éolienne, dans le cas d'une tête optique montée sur un élément d'éolienne.

Le système optique réfractif monté dans sa monture peut être standard. La fibre optique d'émission et réception montée dans son connecteur optique peut être standard. L'invention facilite l'utilisation de matériel standard, des erreurs d'alignement étant facilement rattrapées avec une tête optique selon l'invention.

Les logements sont avantageusement tubulaires et longitudinaux.

On peut prévoir une telle tête optique, apte à recevoir au moins deux couples consistant en un système optique réfractif et une fibre optique d'émission et réception et comprenant au moins deux logements. On peut ainsi définir au moins deux lignes de visées, par exemple pour reconstituer un profil de vent en deux dimensions, en faisant une hypothèse (par exemple, celle que le vent vertical est nul). Les au moins deux logements sont avantageusement reliés les uns aux autres par l'intermédiaire d'un matériau composite rigide et athermique.

On peut prévoir une telle tête optique, apte à recevoir au moins trois couples consistant en un système optique réfractif et une fibre optique d'émission et réception et comprenant au moins trois logements. On peut ainsi définir au moins trois lignes de visées, par exemple pour reconstituer un profil de vent en trois dimensions. Les au moins trois logements sont avantageusement reliés les uns aux autres par l'intermédiaire d'un matériau composite rigide et athermique.

L'enveloppe externe peut être en fibre de carbone, matériau présentant les propriétés recherchées en terme de rigidité et de stabilité mécanique à l'égard des variations thermiques.

Plusieurs logements sont avantageusement reliés les uns aux autres par l'intermédiaire du même matériau que l'enveloppe externe, pour former une tête optique rigide d'un seul tenant.

Selon un mode de réalisation avantageux, chaque logement consiste en un tube formant l'enveloppe externe et comprenant :
- à une première extrémité un premier insert d'ajustement, pour recevoir un système optique réfractif, et
- à une seconde extrémité un second insert d'ajustement, pour recevoir une fibre optique d'émission et réception.

Selon ce même mode de réalisation, chaque logement consiste de préférence en un tube formant l'enveloppe externe, et chaque première extrémité de tube est fixée à une première plaque de maintien et chaque seconde extrémité de tube est fixée à une seconde plaque de maintien.

Les plaques de maintien peuvent être en matériau composite rigide et athermique.

Elles peuvent présenter la même composition que l'enveloppe externe.

Elles peuvent permettre de réaliser la tête optique rigide d'un seul tenant.

S'il y a plusieurs logements, elles peuvent permettre de garantir la position l'un par rapport à l'autre des axes optiques des différents systèmes optiques réfractifs (chaque axe optique d'un système optique réfractif étant confondu avec l'axe du faisceau de sortie d'une fibre optique d'émission et réception, selon un unique axe).

Selon une variante de ce mode de réalisation, la tête optique comprend :
- une première série d'au moins un logement, pour recevoir chacun un système optique réfractif,
- une seconde série d'au moins un logement, pour recevoir chacun une fibre optique d'émission et réception,
les logements étant reliés les uns aux autres par l'intermédiaire d'un matériau composite rigide et athermique.

Le matériau rigide et athermique peut présenter la même composition que l'enveloppe externe.

Selon un mode de réalisation préféré, la tête optique comprend au moins deux couples consistant chacun en un système optique réfractif et une fibre optique d'émission et réception, chaque logement recevant un système optique réfractif possède un axe mécanique, les axes mécaniques des logements recevant un système optique réfractif sont orientés chacun selon une direction différente et de telle façon qu'au moins deux des logements recevant un système optique réfractif ont leur axe mécanique orienté de telle façon qu'il n'existe pas de plan comprenant leur axe mécanique et un autre axe mécanique de logement recevant un système optique réfractif .

Dans tout le texte, l'axe mécanique d'un logement usiné selon l'Invention correspond à l'unique axe selon lequel l'axe optique du système optique réfractif correspondant est confondu avec l'axe du faisceau de sortie de la fibre optique d'émission et réception correspondante.

Dans un exemple où la tête optique comprend deux couples consistant chacun en un système optique réfractif et une fibre optique d'émission et réception, on ne peut pas trouver un unique plan dans lequel se trouverait les axes mécaniques respectifs des deux logements qui reçoivent un système optique réfractif.

Dans un exemple où la tête optique comprend plus de deux couples consistant chacun en un système optique réfractif et une fibre optique d'émission et réception, aux moins deux logements recevant un système optique réfractif sont positionnés de telle façon qu'on ne peut pas trouver un unique plan dans lequel se trouveraient leurs axes mécaniques respectifs.

Selon une variante de ce mode de réalisation, aucun des logements recevant un système optique réfractif n'a son axe mécanique situé dans le même plan qu'un autre des axes mécaniques de logements recevant un système optique réfractif.

On peut ainsi réaliser une tête optique d'encombrement réduit pour une inclinaison donnée des axes mécaniques les uns par rapport aux autres.

Soient des logements inclinés d'un angle Θ, la tête optique peut par exemple présenter approximativement le même encombrement qu'un volume cylindrique de hauteur H et de diamètre D=H*tan(Θ), alors que les têtes optiques selon l'art antérieur présentent dans ce cas approximativement le même encombrement qu'un volume cylindrique de hauteur H et de diamètre D=2H*tan(Θ).

Pour une tête optique apte à recevoir au moins deux couples consistant chacun en un système optique réfractif et une fibre optique d'émission et réception, on peut définir pour chaque couple un segment correspondant à une portion de l'axe optique du système optique réfractif, et reliant le centre du système optique réfractif et le centre de la fibre optique d'émission et réception correspondante.

Ces segments peuvent être tels que :
- on ne peut pas trouver un unique plan recevant tous ces segments, ou
- les segments sont dans des plans parallèles, et sont sécants après projection orthogonale dans un seul de ces plans.

Au moins deux de ces segments peuvent être tels que:
- on ne peut pas trouver un unique plan recevant ces au moins deux segments, ou
- au moins deux des segments sont dans des plans parallèles, et sont sécants après projection orthogonale dans un seul de ces plans.

Au moins deux de ces segments peuvent être agencés en spirale, c'est-à-dire que :
- leurs premières extrémités respectives sont sécantes avec un périmètre d'une coupe supérieure d'un cône ou d'un cylindre,
- leurs deuxièmes extrémités respectives sont sécantes avec un périmètre d'une coupe inférieure d'un cône ou d'un cylindre, et on ne peut pas trouver un unique plan recevant ces au moins deux segments.

Tous les segments sauf un segment central peuvent être agencés en spirale.

Les logements recevant un système optique réfractif peuvent être au nombre de cinq et présenter chacun un axe mécanique.

On peut ainsi obtenir cinq points de mesure, pour calculer avec une précision optimale un profil de vent (on est moins sensible aux sources de perturbations telles que les turbulences atmosphériques, le bruit de mesure, etc).

Avantageusement, les cinq logements recevant un système optique réfractif se composent de :
- quatre logements recevant un système optique réfractif, répartis autour
- d'un logement recevant un système optique réfractif central
et les axes mécaniques des quatre logements recevant un système optique réfractif sont agencés en spirale, c'est-à-dire que ces axes mécaniques sont chacun sécants avec un périmètre d'une coupe supérieure et un périmètre d'une coupe inférieure d'un cône ou d'un cylindre.

De préférence, les axes mécaniques des cinq logements sont tous orientés selon une direction différente dans l'espace.

On peut ainsi obtenir une tête optique offrant cinq directions de mesure pour une précision optimale de la reconstruction d'un profil de vent. La tête optique peut être peu encombrante. En particulier, une telle tête optique peut être moins encombrante qu'une tête optique comprenant le même nombre de logements pour système optique réfractif, dans laquelle les axes mécaniques des logements appartiennent à la face latérale d'un même cône ou d'un même cylindre.

De préférence, le cône est un cône de révolution d'axe de révolution confondu avec l'axe mécanique du logement central.

De préférence, le cylindre est un cylindre de révolution d'axe de révolution confondu avec l'axe mécanique du logement central.

Selon un dernier mode de réalisation, la tête optique peut comprendre au moins deux couples consistant chacun en un système optique réfractif et une fibre optique d'émission et réception, tous les axes mécaniques des logements étant parallèles entre eux.

La tête optique peut ainsi être particulièrement compacte.

L'invention concerne aussi un système d'émission et réception selon la revendication 11.

Selon un mode de réalisation particulier de l'invention, celle-ci concerne un système d'émission et réception selon la revendication 12.

Selon un mode de réalisation particulier de l'invention, celle-ci concerne un système d'émission et réception selon la revendication 13.

Le système d'émission et réception peut comprendre un commutateur optique pour diriger alternativement selon chaque ligne de visées un faisceau laser émis par une unique source lumineuse, et pour diriger alternativement vers un unique récepteur des faisceaux de retour traversant l'un des systèmes optiques réfractifs.

On réalise ainsi un système d'émission et réception léger et compact puisqu'on n'a qu'une seule source lumineuse et un seul récepteur.

Une centrale inertielle peut être solidaire de la tête optique.

On peut ainsi connaître en temps réel l'orientation des lignes de visées par rapport à un axe de référence tel que l'axe vertical, et reconstruire ainsi avec précision un profil de vent.

L'invention concerne encore un procédé de fabrication d'une tête optique selon l'une quelconque des revendications 1 à 10, le procédé comportant les étapes suivantes :
- on découpe pour chaque logement une longueur voulue d'un tube présentant une première composition en matériau composite rigide et athermique et on fixe à l'intérieur de chaque tube au moins un insert d'ajustement métallique présentant une seconde composition plus facilement usinable que la première ;
- on usine au moins un parmi l'au moins un insert d'ajustement, de façon à affiner l'alignement de l'axe d'un faisceau de sortie de la fibre optique d'émission et réception avec l'axe optique du système optique réfractif correspondant.

Un axe aligné avec un autre signifie ici que ces deux axes sont confondus.

On peut prévoir, avant l'usinage, une étape lors de laquelle on relie les logements ensemble, notamment dans le cas où on réalise une tête optique à un plusieurs logements.

Le tube constitue une enveloppe externe d'un logement de la tête optique selon l'invention.

Selon une variante de ce procédé, l'invention concerne aussi un procédé de fabrication d'une tête optique selon l'une quelconque des revendications 1 à 10, le procédé comportant les étapes suivantes :
- on réalise par mise en forme au moins un logement, le logement ainsi formé possédant une première composition en matériau composite rigide et athermique, à l'intérieur de laquelle se trouve au moins une partie formée comme un insert d'ajustement et présentant une seconde composition plus facilement usinable que la première ;
- on usine au moins une parmi l'au moins une partie formée comme un insert d'ajustement, de façon à affiner l'alignement de l'axe d'un faisceau de sortie d'une fibre optique d'émission et réception avec l'axe optique d'un système optique réfractif correspondant.

On peut prévoir, avant l'usinage, une étape lors de laquelle on relie les tubes ensemble, notamment dans le cas où on réalise une tête optique à un plusieurs logements.

Ces deux procédés peuvent être combinés : un insert d'ajustement pouvant être fixé dans un tube déjà mis en forme de façon à présenter une partie formée comme un insert d'ajustement.

On parle d'une partie formée comme un insert d'ajustement, car cette partie est mise en forme en même temps que l'enveloppe externe, mais ne présente pas la même composition. Elle peut être formée comme épaulement. Elle peut faire saillie du côté intérieur de l'enveloppe externe.

La mise en forme peut comprendre :
- un moulage par injection,
- une injection dite RTM (Resin transfer Molding)
- une injection dite R.RIM (Reinforced Reaction Injection Molding)
- une imprégnation en continu,
- une pultrusion,
- un estampage,
- etc

Selon ces deux variantes, le procédé de fabrication selon l'invention peut comprendre ensuite les étapes suivantes :
- on positionne la tête optique par rapport à un repère spatial prédéterminé,
- on usine au moins un parmi l'au moins un insert d'ajustement, de façon à affiner l'alignement d'un axe mécanique d'un logement par rapport à un axe de référence dans le repère spatial prédéterminé.

De préférence, on s'intéresse dans la dernière étape à l'alignement de l'axe mécanique d'un logement recevant un système optique réfractif.

Pour des raisons de clarté, il est dit que dans cette dernière étape on usine un insert d'ajustement. Il est clair que l'on désigne alors aussi bien un insert d'ajustement qu'une partie formée comme un insert d'ajustement.

Avantageusement, l'axe de référence est fixe dans un référentiel donné, référentiel dans lequel la tête optique est fixe lorsqu'elle effectue une mesure. Il peut s'agir du référentiel galiléen, dans le cas où la tête optique est utilisée au sol. Il peut s'agir d'un référentiel lié à un élément d'une éolienne, dans le cas d'une tête optique montée sur un élément d'éolienne.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 illustre un premier mode de réalisation de tête optique selon l'invention,
- la figure 2 illustre un deuxième mode de réalisation de tête optique selon l'invention,
- la figure 3 illustre un troisième mode de réalisation de tête optique selon l'invention,
- la figure 4 illustre une coupe vue de profil d'un premier mode de réalisation d'un logement selon l'invention,
- la figure 5 illustre une coupe vue de profil d'un deuxième mode de réalisation d'un logement selon l'invention,
- la figure 6 illustre de façon schématique une architecture de tête optique selon l'invention,
- la figure 7 illustre un mode de réalisation d'un LIDAR comprenant un système d'émission et réception selon l'invention,
- la figure 8 illustre une coupe d'un système d'émission et réception selon l'invention,
- la figure 9 illustre un commutateur optique pouvant être mis en œuvre dans un système d'émission et réception selon l'invention,
- la figure 10 illustre une plaque de maintien d'une tête optique selon le premier mode de réalisation de l'invention,
- la figure 11 illustre une vue en coupe d'un système d'émission et réception en l'absence d'usinage des inserts,
- les figures 12a, 12b et 12c représentent différentes étapes d'un procédé selon l'invention,
- la figure 13 illustre une coupe d'un logement de tête optique selon l'invention,
- la figure 14 illustre un premier exemple d'utilisation d'une tête optique selon l'invention, et
- la figure 15 illustre un deuxième exemple d'utilisation d'une tête optique selon l'invention.

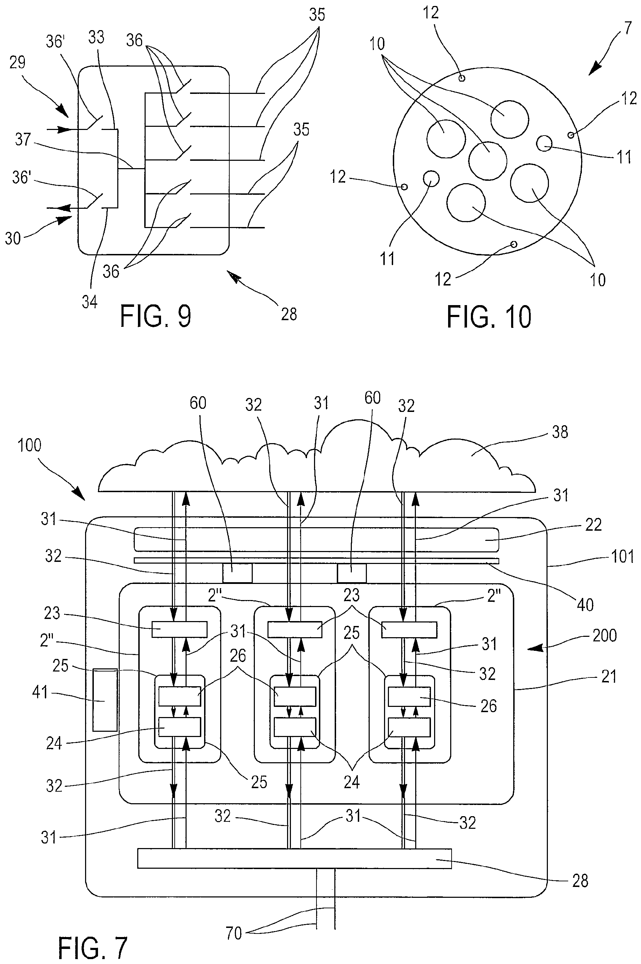

On va tout d'abord décrire, en référence à la figure 7, un LIDAR 100 comprenant un système d'émission et réception 200 selon l'invention. Le LIDAR 100 permet d'effectuer des mesures atmosphériques, en particulier de mesurer un profil de vent à une certaine altitude au-dessus du LIDAR.

Le système d'émission et réception 200 est agencé à l'intérieur d'un boîtier 101 étanche, qui est par exemple construit en structure composite IP67 (par exemple de la fibre de verre qui assure l'étanchéité). On rappelle que la formule IPXY définit un indice de protection qui indique le niveau de protection qu'offre le matériau aux intrusions de corps solides et liquides, où X et Y sont généralement des chiffres définissant respectivement une protection à l'égard des corps solides et une protection à l'égard des liquides. Le boîtier 101 comprend un hublot 22 traversé par au moins un faisceau de mesure 31 et un faisceau de retour 32.

Le système d'émission et réception 200 selon l'invention comprend une tête optique qui se compose de trois logements 2", rendus solidaires les uns des autres par l'élément 21. L'élément 21 est représenté entourant les logements, mais il ne s'agit que d'une représentation symbolique pour montrer que les logements forment un assemblage rigide d'un seul tenant. Dans cet exemple, chaque logement 2" reçoit d'un côté tournée vers le hublot 22 un télescope 23. Le télescope 23 peut permettre de focaliser sur un point de mesure dans l'atmosphère un faisceau de mesure 31. Le télescope 23 peut à titre d'alternative collimater un faisceau de mesure 31. De l'autre côté, chaque logement 2" reçoit un connecteur 24 pour une fibre optique d'émission et réception (non représentée). Dans l'exemple représenté, le connecteur 24 est logé dans un bloc 25, qui est par exemple construit en métal ou en structure composite IP51. Chaque bloc 25 reçoit un connecteur 24 et, dans la variante représentée, une lame quart d'onde 26 qui permet de passer d'une polarisation rectiligne à une polarisation circulaire, et vice-versa.

Grâce à ce boîtier 101 étanche et indépendant, le système d'émission et réception 200 peut être facilement extrait du LIDAR 100 pour effectuer des opérations de maintenance, pour le remplacer, etc. Il suffit pour cela de débrancher la ou les fibres optiques 70 reliant le système d'émission et réception à une source laser et à un récepteur (non représentés), puis d'extraire tout le boîtier 101.

A chaque télescope 23 correspond une fibre optique d'émission et réception, l'axe optique 50 d'un télescope 23 étant aligné selon un unique axe avec l'axe de propagation du faisceau de sortie de la fibre optique d'émission et réception correspondante. Cet unique axe est appelé axe mécanique 52 du logement 2".

Le télescope 23 travaille dans l'axe : les aberrations géométriques sont donc minimisées.

Le télescope 23 travaille dans l'axe : le rendement énergétique est optimisé.

Dans le cas d'un logement en forme de cylindre de révolution, son axe mécanique est l'axe de rotation du cylindre de révolution.

Chaque fibre optique d'émission et réception reçue par un connecteur optique 24, est reliée à un commutateur optique 28 (on parle plus communément de switch ou switch optique). Un exemple de commutateur optique 28 est représenté plus en détail à la figure 9. Le commutateur optique 28 présente une entrée 29 reliée à une unique source laser (non représentée) et émettant un faisceau de mesure 31 (représenté en trait simple à la figure 7). La puissance optique moyenne d'un faisceau de mesure 31 est typiquement comprise entre 10mW et 10W. Le taux de rétrodiffusion sur des particules atmosphériques est très faible, d'où une forte perte de puissance entre le faisceau de mesure 31 et un faisceau de retour 32. Le commutateur 28 présente une sortie 30 reliée à un unique récepteur (non représenté), pour le faisceau de retour 32 (représenté en trait double à la figure 7). L'unique récepteur peut comprendre des moyens d'analyse des caractéristiques des faisceaux de retour 32 et de reconstruction d'un profil de vent.

Dans l'exemple représenté à la figure 9, un chemin d'entrée 33 en fibre optique relie l'entrée 29 et un chemin central 37 en fibre optique. Un chemin de sortie 34 en fibre optique relie la sortie 30 et le chemin central 37. Le chemin central 37 est relié à plusieurs chemins d'émission et réception 35 amenant chacun à l'un des connecteurs optiques 24 et formés par une fibre optique d'émission et réception, Le chemin d'entrée 33 et le chemin de sortie 34 peuvent être alternativement ouverts ou fermés grâce à des interrupteurs 36'. Les chemins d'émission et réception 35 peuvent être alternativement ouverts ou fermés grâce à des interrupteurs 36. A la figure 9, tous les interrupteurs 36 et 36' sont représentés ouverts. Par un pilotage adéquat des interrupteurs 36 et 36', le faisceau de mesure 31 est dirigé depuis l'unique source laser vers alternativement vers un seul des chemins d'émission et réception 35. De même, le faisceau de retour 32 est dirigé de l'un des chemins d'émission et réception 35 vers le chemin de sortie 34. Les interrupteurs 36 et 36' peuvent comprendre des actuateurs piézo-électriques. Les interrupteurs peuvent consister en des microsystèmes opto-électromécaniques (on parle aussi de MOEMS, d'après leur appellation anglaise Micro-Opto-Electro-Mechanical Systems). Selon une variante avantageuse non représentée, les interrupteurs 36' situés sur le chemin de sortie 34 et sur le chemin d'entrée 33 peuvent être remplacés par un séparateur de polarisation, par exemple un cube séparateur de polarisation. Un séparateur de polarisation peut être utilisé dans un mode de réalisation de système d'émission et réception 200 selon l'invention, comprenant des lames quart d'onde 26. L'unique source laser émet un faisceau de mesure 31 polarisé linéairement selon un axe X. Ce faisceau est dirigé sur l'un des chemins d'émission et réception 35. Il traverse ensuite l'un des logements 2", en passant à travers une lame quart d'onde 26. Il est alors polarisé circulairement dans un sens donné. Après rétrodiffusion, par exemple sur des particules d'un nuage 38 (voir figure 7), Il forme un faisceau de retour 32 qui effectue, jusqu'au commutateur 28, le trajet inverse du trajet suivi par le faisceau de mesure 31. Il traverse le même logement 2" dans l'autre sens et passe de nouveau à travers la même lame quart d'onde 26. Il est alors polarisé linéairement selon un axe Y perpendiculaire à sa polarisation initiale. Le séparateur de polarisation permet alors de le diriger le faisceau de retour 31 vers l'unique récepteur.

Le commutateur optique 28 permet d'avoir une unique source laser et un unique récepteur, ce qui est particulièrement économique. Il est dix fois plus léger qu'un système de pilotage de plusieurs sources laser mettant en œuvre des moteurs. En outre, il offre également une gamme de température de fonctionnement comprise entre -30°C et 60°C. Contrairement aux moteurs, il ne créée pas de champ électromagnétique. Sa consommation énergétique est très réduite est nettement inférieure à celle d'un moteur.

Selon une variante non représentée, il n'y a pas de commutateur optique 28, mais plutôt une source laser pour chaque télescope 23. Selon une autre variante non représentée, il n'y a pas de commutateur optique 28 mais une unique source laser suivie d'un séparateur de puissance pour diriger une portion de la puissance vers chacun des télescopes, ce qui exige que la puissance de l'unique source laser soit très élevée.

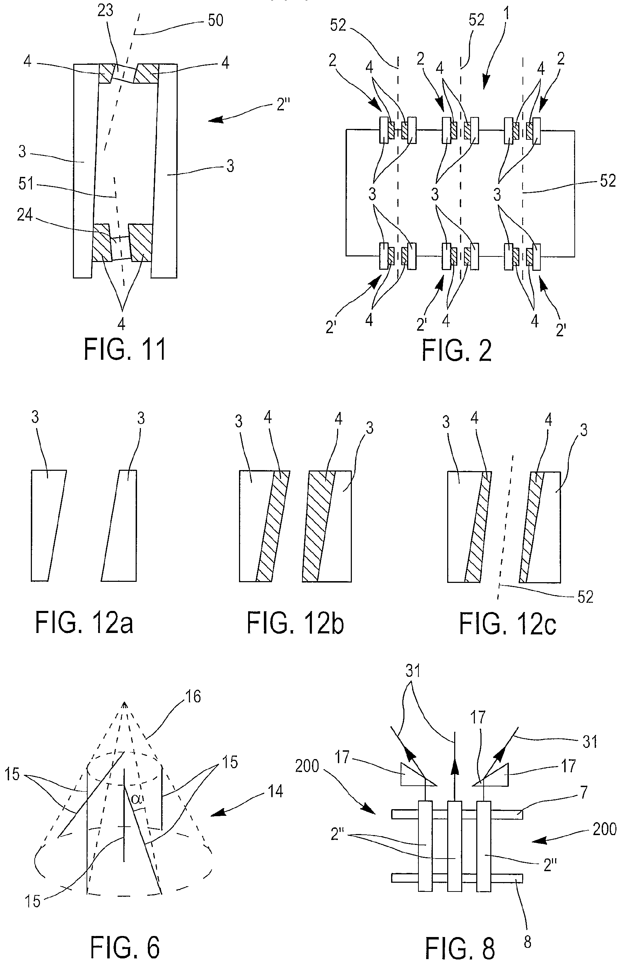

La figure 7 permet de visualiser le faisceau de mesure 31 et le faisceau de retour 32 pour chacun des télescopes 23. Une ligne de visée correspond à une direction de mesure dans l'espace et à un faisceau de mesure 31 en sortie du LIDAR 100. Une ligne de visée est définie par une origine qui est un point dans l'espace à trois dimensions, et un vecteur qui définit une direction. Une ligne de visée désigne une position et une orientation dans l'espace d'un faisceau de mesure 31 en sortie d'un système d'émission et réception 200 selon l'invention. Dire qu'un système d'émission et réception selon l'invention comprend N lignes de visée signifie qu'il y a N faisceaux de mesure 31 non superposés. Une ligne de visée peut par exemple être définie par l'axe optique 50 d'un télescope (attention, ce n'est pas le cas à la figure 8 puisqu'il y a un prisme de déviation en aval du télescope).

Le hublot 22 est transparent à la longueur d'onde du faisceau de mesure 31, et il est traversé par chacun des faisceaux de mesure 31 et des faisceaux de retour 32 (il est à haute transmission à une ou plusieurs longueurs d'onde comprises entre 1520nm et 1560nm). Le côté extérieur du hublot 22 (en référence à l'extérieur du boîtier 101) peut présenter un traitement hautement réfléchissant aux longueurs d'onde dans le visible (entre 400nm et 800nm) et/ou un traitement anti-reflet du côté extérieur, à la longueur d'onde du faisceau de mesure 31 et du faisceau de retour 32 (typiquement dans l'infrarouge, aux longueurs d'onde comprises entre 1520nm et 1560nm), On évite ainsi que l'intérieur du boîtier 101 se réchauffe à cause du rayonnement solaire. Le hublot 22 peut être recouvert côté intérieur du boîtier 101 d'un film chauffant 40, qui sert à chauffer le hublot 22 pour éviter que la surface externe ne gèle. Le film chauffant peut consister en un film autocollant auquel sont fixés des serpentins cuivrés.

Il est alors possible de relier le hublot 22 à un thermostat de façon à contrôler la température du hublot 22 en ne déclenchant un chauffage qu'au dessous ou au dessus d'une température donnée.

On peut en outre prévoir des ventilateurs 60 entre le hublot 22 et les logements 2", pour éviter la condensation sur la face interne du hublot 22.

De façon avantageuse, le LIDAR 100 comprend une centrale inertielle 41 qui peut être solidaire de la tête optique. La centrale inertielle 41 peut comprendre un niveau numérique ou une boussole électronique.

Le vent vertical est en général environ dix à vingt fois inférieur au vent horizontal.

Il peut être crucial de placer correctement l'axe vertical par rapport à la tête optique du LIDAR. Typiquement, on prévoit en outre un simple niveau à bulle sur le hublot 22, pour donner à un utilisateur une première approximation de la position de l'axe vertical par rapport à la tête optique.

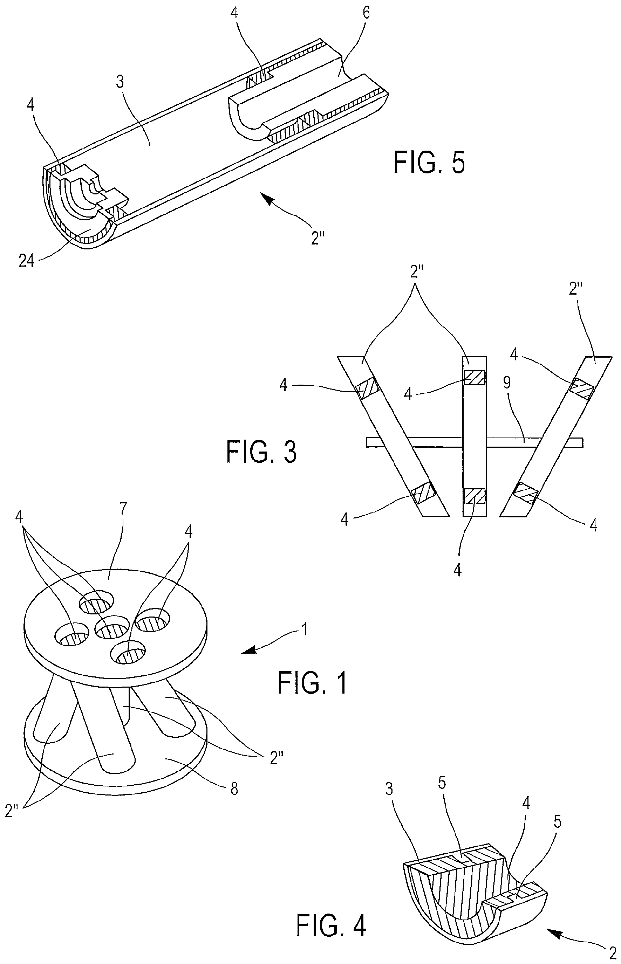

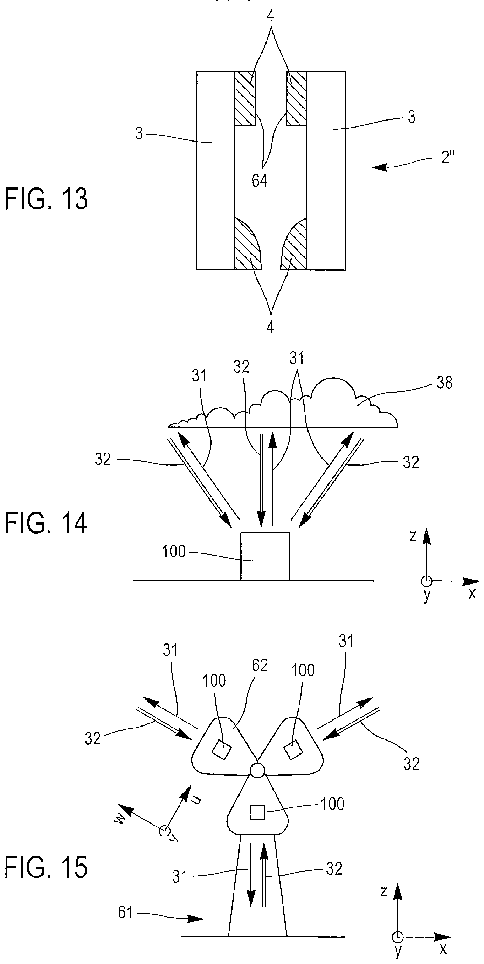

La figure 2 présente un exemple de tête optique 1 selon l'invention, vue en coupe. La tête optique 1 comprend trois logements 2 chacun destiné à recevoir un télescope 23 (dans sa monture), et trois logements 2' chacun destiné à recevoir une fibre optique d'émission et réception (dans son connecteur 24). Chaque logement 2 comprend une enveloppe externe 3 en un premier matériau rigide et athermique tel que la fibre de carbone. La fibre de carbone permet de respecter des contraintes de poids et de stabilité thermique. Son coefficient de dilatation thermique est de préférence inférieur à 3,6.10⁻⁶K⁻¹. Chaque logement comprend ensuite un insert d'ajustement 4 fixé à l'intérieur de l'enveloppe externe 3, et représenté en hachures sur les figures. Les inserts d'ajustement 4 présentent une deuxième composition plus facilement usinable que celle de l'enveloppe externe 3. Ils sont typiquement en un métal tel que l'aluminium. La fixation d'un insert d'ajustement 4 dans une enveloppe externe 3 peut se faire par collage, par fixation par pions 5 (voir figure 4). On peut aussi opter pour une fixation utilisant des tiges en carbone de façon à limiter le déplacement d'un insert 3 dans l'enveloppe externe 4. On peut coller les inserts d'ajustement 4 dans les enveloppes externe 3 à partir d'une colle structurale. Tous les collages peuvent être réalisés sous enceinte contrôlée en température et en humidité, afin d'obtenir les meilleures performances de collage. On peut aussi réaliser l'ensemble formé d'une enveloppe externe 3 et d'au moins un insert d'ajustement 4, directement par mise en forme, par exemple par moulage par injection. Ce mode de fabrication est représenté à la figure 13, et sera décrit dans la suite.

Un insert d'ajustement 4 peut être en matériau AU2GN (alliage de métaux comprenant de l'aluminium). Chaque insert d'ajustement 4 forme un support pour un télescope 23 ou une fibre optique d'émission et réception. Plus précisément, un insert d'ajustement 4 peut recevoir un connecteur optique 24 auquel est connectée une fibre optique d'émission et réception. Plus précisément, un insert d'ajustement 4 peut recevoir une monture 6 (on parle aussi de barillet) pour un télescope, typiquement un doublet de lentilles. Le doublet peut être achromatique. Le doublet peut être asphérique. L'insert d'ajustement 4 sert de guide et de maintien pour aligner l'axe du faisceau de sortie d'une fibre optique d'émission et réception avec l'axe optique du télescope correspondant. La face externe de l'insert d'ajustement 4 peut être moletée pour garantir un bon collage avec l'enveloppe externe 3. Typiquement, l'insert d'ajustement 4 est un cylindre creux d'une longueur comprise entre 2mm et 50mm, par exemple 10mm, et d'une largeur par exemple inférieure à 2mm,

Selon le mode de réalisation représenté à la figure 2, à chaque logement 2 pour recevoir un télescope 23 correspond un logement 2' pour recevoir une fibre optique d'émission et de réception. Les logements 2 pour recevoir un télescope 23 et les logements 2' pour recevoir une fibre optique d'émission et réception sont reliés entre eux par une structure faite du même matériau que les enveloppes externes 3, pour former une tête optique d'un seul tenant. La figure 4 représente une vue en perspective d'une coupe d'un logement 2 (ou 2') tel que représenté à la figure 2.

Selon une variante de ce mode de réalisation représentée aux figures 1, 3, 5 et 13, les enveloppes externes 3 sont formées chacune par un tube pour former un logement 2" longitudinal tubulaire qui reçoit à la fois une fibre optique d'émission et réception et un télescope 23. (On aussi peut parler pour être plus général de « logement longitudinal tubulaire ». On désigne dans ce cas n'importe quel logement tubulaire, notamment un canal formé dans un bloc de matière.) D'un côté du tube se trouve un insert d'ajustement 4 pour recevoir une fibre optique d'émission et réception. De l'autre côté du tube se trouve un insert d'ajustement 4 pour recevoir un télescope 23. A la figure 1, les tubes forment ensemble une tête optique 1 d'un seul tenant en étant reliés par l'intermédiaire d'une plaque de maintien supérieure 7 et d'une plaque de maintien inférieure 8. Les plaques de maintien supérieure 7 et inférieure 8 sont faites du même matériau que les tubes. Les tubes peuvent aussi former une tête optique 1 monobloc en étant reliés par une unique plaque de maintien 9 (voir figure 3). La longueur d'un tube est typiquement de 160mm.

En particulier à la figure 3, mais aussi à la figure 1, on voit que les inserts d'ajustement 4 présentent environ la même longueur que le connecteur optique ou la monture qu'ils reçoivent, ce qui économise de la matière.

Les figures 14 et 15 permettent d'illustrer un avantage très intéressant de l'invention.

La figure 14 présente un exemple d'utilisation d'un LIDAR 100 au sol. Le LIDAR 100, en cours d'utilisation, est fixe dans le repère Galiléen xyz. De la même façon, la tête optique 1 dudit LIDAR 100, est fixe par rapport au LIDAR 100 et dans le repère Galiléen xyz. De la même façon, chaque logement de la tête optique 1 est fixe dans le repère Galiléen xyz.

Or, il est crucial pour obtenir une mesure précise d'un profil de vent, de pouvoir maîtriser la position dans l'espace des lignes de visées.

On veut donc maîtriser notamment l'orientation dans l'espace de l'axe optique du télescope 23 correspondant à cette ligne de visée.

Un télescope 23 est agencé dans un logement de la tête optique 1, et son orientation dépend de la forme interne du logement qui le supporte.

L'orientation de l'axe optique 50 du télescope 23 dépend donc de la forme interne du logement qui le supporte.

Grâce aux inserts d'ajustement 4, on peut facilement corriger un défaut mécanique interne d'un logement.

Grâce aux inserts d'ajustement, on ajuste la forme interne d'un logement recevant un télescope 23, de façon notamment que l'axe optique 50 d'un télescope 23 soit orienté dans l'espace de façon à définir une ligne de visée souhaitée.

On définit la position dans l'espace d'un axe optique 50 d'un télescope :
- par rapport à un axe donné du repère Galiléen xyz, et
- les uns par rapport aux autres dans le cas où la tête optique comprend plusieurs logements.

On peut par exemple positionner parfaitement les axes optiques 50 les uns par rapport aux autres, et par rapport à une plaque de maintien, puis lorsqu'on positionne la tête optique 1 pour l'utiliser, aligner parfaitement le plan de la plaque de maintien par rapport à un plan horizontal dans le repère Galiléen, en utilisant la centrale inertielle 41.

La figure 15 présente un exemple d'utilisation d'un LIDAR 100 embarqué sur une pale 62 d'une éolienne 61. Dans ce cas, le LIDAR comprend typiquement une tête optique à un seul logement, pour une seule ligne de visée. Le LIDAR 100, en cours d'utilisation, est fixe dans le repère uvw de la pale 62 à laquelle il est fixé. De la même façon, la tête optique 1 dudit LIDAR 100, est fixe par rapport au LIDAR 100 et dans le repère uvw de la pale 62. De la même façon, le logement de la tête optique 1 est fixe dans le repère uvw de la pale 62.

Dans cet exemple, on souhaite pouvoir maîtriser la position d'une ligne de visée, dans le repère de la pale 62. L'écoulement du vent sur la pale 62 dépend de sa géométrie, On peut calculer la direction selon laquelle la vitesse du vent sera maximale par rapport à la pale 62, pour orienter ensuite une ligne de visée selon cette direction, dans le repère de la pale 62.

On veut donc maîtriser notamment l'orientation dans le repère uvw de l'axe optique 50 du télescope 23 correspondant à cette ligne de visée.

Grâce aux inserts d'ajustement, on ajuste la forme interne d'un logement recevant le télescope 23, de façon notamment que l'axe optique 50 du télescope 23 soit orienté dans le repère uvw pour définir la ligne de visée souhaitée.

On définit la position dans l'espace de l'axe optique 50 du télescope par rapport à un axe donné du repère de la pale 62.

D'une façon générale, la tête optique selon l'invention permet de positionner de façon très précise dans un référentiel imposé, chaque axe mécanique d'un logement de la tête optique.

La conception des différents exemples de tête optique, d'un seul tenant, permet aussi d'être insensible aux chocs et aux vibrations.

On va maintenant décrire plusieurs exemples de procédé de fabrication d'une tête optique selon l'invention.

Dans l'exemple représenté à la figure 13, on réalise par injection Resin Transfer Moulding (dite RTM) l'ensemble comportant l'enveloppe externe 3 et un insert d'ajustement 4 (celui situé vers le bas sur la figure 13). L'enveloppe externe 3 est en fibre de carbone, ce qui lui confère une grande stabilité thermique. En raison de la présence des fibres dans sa structure, elle ne peut cependant pas être facilement usinée. L'insert d'ajustement 4 situé en bas sur la figure 13, est réalisé en même temps par injection RTM, mais sa structure est différente. Il est composé de la même résine que celle qui lie les fibres de carbone, mais ne comprend pas de fibres. Il peut cependant comporter de la poudre de carbone. L'absence des fibres permet d'usiner plus facilement cet insert d'ajustement 4, en particulier d'effectuer une rectification.

L'insert d'ajustement 4 situé vers le haut sur la figure 13 est destiné à recevoir un télescope 23 (dans sa monture 6). Il est collé dans l'enveloppe externe 3, et est usiné pour réaliser un filetage sur sa face interne 64. Ce filetage permet de positionner le télescope dans l'insert d'ajustement 4 de façon réglable.

La fabrication d'une tête optique 1 selon l'invention peut aussi se faire selon le procédé qui suit.

Dans une première étape, on découpe pour chaque logement une longueur voulue d'un tube en matériau rigide et athermique tel que la fibre de carbone. Ce tube formera l'enveloppe externe 3 selon l'invention. On choisit un matériau athermique, à faible coefficient de dilatation thermique. On peut ainsi maintenir la distance entre un télescope 23 et une sortie de fibre optique d'émission et réception correspondante. La tête optique 1 peut être soumise à d'importants gradients de température, typiquement de -30°C à 60°C. Avec les matériaux couramment utilisés, ces gradients entraînent des effets de dilatation mécanique. Or, ces effets peuvent entraîner des erreurs dans la reconstruction du vent. En particulier, il est très important que la distance séparant le télescope de la sortie de la fibre optique d'émission et réception soit constante, car une variation de quelques dizaines de micromètres peut faire varier la distance de focalisation de quelques mètres. Cette distance peut être maintenue grâce à un tube formant enveloppe externe 3 stable en température, et recevant à la fois le télescope 23 et le connecteur de fibre optique d'émission et réception correspondant.

Dans une deuxième étape, on fixe à l'intérieur de chaque tube deux inserts d'ajustement 4 en métal, un à chaque extrémité. Ces deux premières étapes peuvent être réalisées dans un ordre ou dans l'autre. La fixation est décrite ci-avant avec plus de précisions (collage, fixation par pions, etc).

Dans une troisième étape, on relie ensemble les tubes. On peut les relier par des plaques de maintien 7, 8. On relie les tubes ensemble avec un matériau rigide et athermique. On maintient ainsi notamment l'inclinaison relative des lignes de visées entre elles. On maintient aussi la distance entre un télescope 23 et une sortie de fibre optique d'émission et réception correspondante dans le mode de réalisation représenté à la figure 2.

La tête optique selon l'invention permet de maintenir la focalisation des faisceaux de mesure 31 à plus ou moins 5 mètres autour d'une zone prédéfinie.

L'homme du métier choisit généralement de grandes focales, ce qui permet de réduire la précision exigée du positionnement entre le télescope et la sortie de la fibre optique d'émission et réception, mais cette solution amplifie les problèmes de dilatation, et augmente l'encombrement, la masse et le coût de la tête optique. La solution proposée ici est donc particulièrement avantageuse.

Dans le mode de réalisation représenté à la figure 1, les plaques de maintien supérieure 7 et inférieure 8 permettent de maintenir les axes mécaniques 52 des logements 2" tous inclinés d'un angle de 28° par rapport à un logement central qui définit un axe de référence. Les plaques de maintien 7, 8 sont par exemple parallèles, et perpendiculaires par rapport à l'axe de référence.

Dans une dernière étape, on usine les inserts d'ajustement 4. Les inserts d'ajustement 4 sont en métal facilement usinable. On peut ainsi très facilement rattraper des erreurs et imprécisions de positionnement des enveloppes externes 3. Les enveloppes externes 3 ainsi que ce qui les relie entre elles étant en matériau rigide, l'usinage des inserts d'ajustement 4 alors qu'ils sont fixés dans les enveloppes externes 3 peut être précis (l'enveloppe externe 3 est insensible aux vibrations causées par l'usinage de l'insert d'ajustement 4 correspondant), On peut usiner les inserts d'ajustement 4 pour obtenir par exemple une précision inférieure à plus ou moins 0,1° (voir même inférieure à plus ou moins 0,08°) dans le positionnement angulaire des lignes de visées et une concentricité meilleure que 0,01mm entre les inserts d'ajustement 4 correspondant à une même ligne de visée.

En effet, un défaut d'angle induit du biais dans la reconstruction du vent à partir des lignes de visée.

On peut usiner les inserts d'ajustement 4 pour rattraper des erreurs de centrage, notamment le centrage de la sortie d'une fibre optique d'émission et réception par rapport à l'axe optique du télescope correspondant.

On rend ainsi colinéaires l'axe mécanique du connecteur optique 24 d'une fibre optique d'émission et réception, et l'axe mécanique d'une monture 6 d'un télescope (l'axe mécanique de la monture 6 étant confondu avec l'axe optique du télescope qu'elle reçoit).

On usine les inserts d'ajustement 4 pour les fileter, de façon à ce que le positionnement d'une monture 6 de télescope dans un logement soit réglable (pour la mise au point de la focale).

On usine un logement afin que l'axe optique 50 du télescope 23 qu'il reçoit et le faisceau de sortie de la fibre optique d'émission et réception correspondante définissent ensemble une ligne de visée prédéterminée.

La figure 11 illustre l'un des avantages de cet usinage, rendu possible par la structure d'un logement en deux enveloppes aux propriétés définies ci-avant.

On voit à la figure 11 qu'en l'absence d'usinage d'au moins un insert 4, l'axe optique 50 du télescope 23 n'est pas aligné selon avec l'axe 51 du faisceau de sortie de la fibre optique d'émission et réception.

Après usinage d'un insert d'ajustement 4, l'axe optique 50 du télescope 23 monté dans cet insert d'ajustement 4 peut être positionné de la façon voulue.

Après usinage d'un insert d'ajustement 4, l'axe 51 du faisceau de sortie de la fibre optique d'émission et réception montée dans cet insert d'ajustement 4 peut être positionné de la façon voulue.

Les figures 12a, 12b et 12c présentent le principe du procédé selon l'invention.

Les figures 12a, 12b, et 12c représentent des vues en coupe d'un logement en cours de fabrication.

On fixe un insert d'ajustement 4 selon l'invention, à l'intérieur de l'enveloppe externe 3 (voir passage de la figure 12a à la figure 12b). L'étape de liaison ensemble des tubes n'est pas représentée.

L'insert d'ajustement 4 est en forme de cylindre creux.

On usine au moins un insert d'ajustement 4 pour définir l'unique axe appelé axe mécanique 52 du logement (2 ou 2' ou 2"), et selon lequel sont alignés l'axe optique d'un télescope 23 correspondant au logement et l'axe du faisceau de la fibre optique d'émission et réception correspondante.

On peut usiner en même temps deux inserts d'ajustement, l'un formant support pour un télescope, l'autre formant support pour la fibre optique d'émission et réception correspondante.

On peut aussi usiner une plaque de maintien 7, 8, de façon à garantir un positionnement de la tête optique 1 par rapport à la verticale. On peut aussi usiner au moins une extrémité de logement 2", de façon à garantir un positionnement de la tête optique 1 par rapport à la verticale. L'horizontalité de la plaque de maintien supérieure 7 peut garantir la verticalité de l'une des lignes de visée prise comme référence. On réalise par exemple une plaque de maintien plane à 0,05mm près, située à l'horizontale à 0,05mm près.

On va maintenant décrire la figure 10 qui représente une plaque de maintien 7, 8 selon l'invention. La plaque de maintien 7, 8 présente des ouvertures 10 pour laisser passer un faisceau de mesure 31 et le faisceau de retour 32 correspondant. Des trous 11 permettent de laisser passer l'air mis en mouvement par les ventilateurs 60. Des trous 12 permettent de maintenir la tête optique 1 en position lors de l'usinage des inserts.

On s'intéresse ensuite plus particulièrement à l'architecture des logements. La figure 6 présente un exemple d'architecture 14 d'une tête optique 1.

On peut définir pour chaque couple {télescope, fibre optique d'émission et réception}, un segment 15 correspondant à une portion de l'axe optique 50 du télescope 23, et reliant le centre du télescope 23 et le centre de la fibre optique d'émission et réception correspondante.

Le segment 15 central définit un axe de référence, et les autres segments sont tous orientés dans une direction différente, et répartis dans l'espace de telle façon qu'aucun des segments 15 n'est situé dans le même plan qu'un autre des segments 15. On peut néanmoins prévoir que certains segments 15 soient dans le même plan. Dans l'exemple représenté à la figure 6, on peut définir un cône de révolution 16 (représenté en pointillés). Le segment central est confondu avec l'axe de rotation du cône de révolution 16. Quatre autres segments sont tels que leurs premières extrémités sont sécantes avec le périmètre d'une première coupe droite du cône de révolution 16, leurs secondes extrémités sont sécantes avec le périmètre d'une deuxième coupe droite du cône de révolution 16. Les segments 15 sont en outre décalés d'un angle α par rapport à une droite passant par l'une de leurs extrémités et par le sommet du cône de révolution 16. On peut remplacer cône 16 par un cylindre de révolution. On peut remplacer le périmètre de la première coupe et celui de la deuxième coupe, par tout couple de deux périmètres fermés situés dans des plans superposés. On peut prévoir que les angles α soient différents pour chacun des quatre segments 15. On peut prévoir que l'angle α soit le même pour chacun des quatre segments 15. Cet angle peut être compris entre 10° et 60°, par exemple 28°. On peut prévoir que l'axe 15 qui définit un axe de référence soit vertical. La figure 1 représente une tête optique 1 présentant une architecture 14 similaire à celle de la figure 6. L'avantage de cette architecture 14 est que l'on obtient un encombrement réduit de la tête optique 1, pour de même angles d'inclinaison des logements, par rapport à une architecture classique par exemple telle que représentée à la figure 3. Sur la figure 3, la tête optique 1 est composée de trois logements 2" situés tous dans le même plan.

L'encombrement de la tête optique est réduit. Sa masse est réduite (notamment dans le mode de réalisation mettant en œuvre le commutateur optique 28). L'encombrement réduit permet en outre de réaliser à moindre coût l'étanchéité, grâce à un boîtier 101 plus petit.

Une forme générale en cône, les télescopes 23 étant situés vers le somme du cône, permet que les extrémités des logements comprenant un télescope soient proches, ce qui limite de façon avantageuse la largeur du hublot 22.

On peut aussi obtenir un encombrement réduit avec un mode de réalisation voisin de la tête optique 1, dans laquelle tous les logements sont parallèles entre eux. Ils peuvent aussi avantageusement être de la même longueur. Dans ce cas, la fabrication est plus facile, car les inserts d'ajustement 4 sont toujours positionnés au même endroit dans les enveloppes externes 3. On a par exemple cinq logements dont un central et quatre répartis autour.

La figure 8 représente un système 200 comprenant une telle tête optique 1. Des prismes fixes 17 permettent de dévier les faisceaux de mesure 31 selon différentes lignes de visée. Les prismes fixes 17 permettent aussi de dévier les faisceaux de retour 32 qui reviennent selon la même ligne de visée que le faisceau de mesure 31 correspondant. Les faisceaux de retour 32 sont déviés pour être alignés avec l'axe optique du télescope correspondant. On peut prévoir un prisme de déviation pour chaque ligne de visée, par exemple s'il y a deux lignes de visée. On peut prévoir qu'à l'une des lignes de visée n'est associé aucun prisme de déviation, par exemple s'il y a trois lignes de visée.

Les architectures proposées ont pour point commun qu'elles ne présentent pas de « point chaud », c'est-à-dire qu'aucun faisceau de mesure 31 ne croise un autre faisceau de mesure 31 à la sortie de la tête optique 1. De préférence, aucune zone accessible à un utilisateur n'est éclairée de façon continue. (En effet, si tous les faisceaux de mesure 31 se croisent en un même point, même si ces derniers ne sont individuellement pas émis en continu, il y a en permanence un faisceau de mesure émis qui passe par ledit point.) On répond ainsi à une contrainte de sécurité oculaire.

D'une façon générale, l'Invention permet de scanner le ciel sans pièces mécaniques mobiles. L'invention permet d'être à sécurité oculaire. On s'affranchit à coût réduit des effets de dilatation.

Bien sûr, l'invention n'est pas limitée aux exemples qui viennent d'être décrits et de nombreux aménagements peuvent être apportés à ces exemples sans sortir du cadre de l'invention, défini par les revendications qui suivent.

## Revendications

1. Tête optique (1) pour effectuer une mesure atmosphérique, apte à recevoir au moins un couple consistant en un système optique réfractif (23) et une fibre optique d'émission et réception, chaque couple définissant une ligne de visée, le système optique réfractif (23) étant monté dans une monture (6) et la fibre optique d'émission et réception étant montée dans un connecteur optique (24), la tête optique étant formée rigide d'un seul tenant et comprenant au moins un logement (2, 2', 2") pour recevoir au moins le système optique réfractif (23), ce logement (2, 2', 2") étant formé par :
- une enveloppe externe (3) présentant une première composition en matériau composite rigide et athermique, à l'intérieur de laquelle est fixé
- au moins un insert d'ajustement (4) métallique formant un support pour la monture du système optique réfractif (23), présentant une seconde composition plus facilement usinable que la première composition,
**caractérisé en ce que** l'au moins un insert d'ajustement (4) formant un support pour la monture du système optique réfractif (23) est usiné pour :
- garantir que l'axe optique (50) du système optique réfractif (23) et l'axe (51) du faisceau de sortie de la fibre optique d'émission et réception soient confondus selon un unique axe, correspondant à une ligne de visée de l'au moins un couple formé par le système optique réfractif (23) et la fibre optique d'émission et réception, et pour garantir le positionnement de cet unique axe par rapport à un axe de référence, et pour former un filetage sur sa face interne (64) permettant un réglage d'un positionnement du système optique réfractif (23) pour la mise au point d'une focale du système optique réfractif (23) ; le filetage étant destiné à recevoir le système optique réfractif (23).

2. Tête optique (1) selon la revendication 1, **caractérisée en ce que** l'enveloppe externe (3) est en fibre de carbone.

3. Tête optique (1) selon la revendication 1 ou 2, dans lequel au moins un logement (2, 2', 2") est agencé pour recevoir au moins la fibre d'émission et réception, ce logement (2, 2', 2") étant formé par :
- une enveloppe externe (3) présentant une première composition en matériau composite rigide et athermique, à l'intérieur de laquelle est fixé
- au moins un insert d'ajustement (4) métallique formant un support pour le connecteur optique (24) de la fibre optique d'émission et réception, présentant une seconde composition plus facilement usinable que la première composition,
l'au moins un insert d'ajustement (4) métallique formant un support pour le connecteur optique (24) de la fibre optique d'émission et réception est usiné pour garantir que l'axe optique (50) du système optique réfractif (23) et l'axe (51) du faisceau de sortie de la fibre optique d'émission et réception soient confondus selon l'unique axe, correspondant à la ligne de visée de l'au moins un couple formé par le système optique réfractif (23) et la fibre optique d'émission et réception, et pour garantir le positionnement de cet unique axe par rapport à l'axe de référence.

4. Tête optique (1) selon la revendication 3, **caractérisée en ce que** chaque logement (2") consiste en un tube formant l'enveloppe externe (3) et comprenant :
- à une première extrémité un premier insert d'ajustement (4), pour recevoir la monture (6) du système optique réfractif (23), et
- à une seconde extrémité un second insert d'ajustement (4), pour recevoir le connecteur optique (24) de la fibre optique d'émission et réception.

5. Tête optique (1) selon la revendication 4, **caractérisée en ce que** chaque logement (2") consiste en un tube formant l'enveloppe externe (3), et **en ce que** chaque première extrémité de tube est fixée à une première plaque de maintien (7) et chaque seconde extrémité de tube est fixée à une seconde plaque de maintien (8).

6. Tête optique (1) selon la revendication 3, **caractérisée en ce que** la tête optique comprend :
- une première série d'au moins un logement (2), pour recevoir chacun un système optique réfractif (23),
- une seconde série d'au moins un logement (2'), pour recevoir chacun une fibre optique d'émission et réception,
les logements (2, 2') étant reliés les uns aux autres par l'intermédiaire d'un matériau composite rigide et athermique.

7. Tête optique (1) selon l'une quelconque des revendications 1 à 6, **caractérisée en ce qu'**elle comprend au moins deux couples consistant chacun en un système optique réfractif (23) et une fibre optique d'émission et réception, **en ce que** chaque logement (2, 2") recevant un système optique réfractif (23) possède un axe mécanique (52) correspondant à l'unique axe, et **en ce que** les axes mécaniques (52) des logements (2, 2") recevant un système optique réfractif (23) sont orientés chacun selon une direction différente et de telle façon qu'au moins deux des logements (2, 2") recevant un système optique réfractif (23) ont leur axe mécanique (52) orienté de telle façon qu'il n'existe pas de plan comprenant leur axe mécanique (52) et un autre axe mécanique (52) de logement (2, 2") recevant un système optique réfractif (23).

8. Tête optique (1) selon l'une quelconque des revendications 1 à 7, **caractérisée en ce que** les logements (2, 2") recevant un système optique réfractif (23) sont au nombre de cinq et présentent chacun un axe mécanique (52) correspondant à l'unique axe.

9. Tête optique (1) selon la revendication 8, **caractérisée en ce que** les cinq logements (2, 2") recevant un système optique réfractif (23) se composent de :
- quatre logements (2, 2") recevant un système optique réfractif (23), répartis autour
- d'un logement (2, 2") recevant un système optique réfractif (23) central et les axes mécaniques (52) des quatre logements (2, 2") recevant un système optique réfractif (23) sont agencés en spirale, c'est-à-dire que ces axes mécaniques sont chacun sécants avec un périmètre d'une coupe supérieure et un périmètre d'une coupe inférieure d'un cône (16) ou d'un cylindre.

10. Tête optique (1) selon l'une quelconque des revendications 1 à 6, **caractérisée en ce qu'**elle comprend au moins deux couples consistant chacun en un système optique réfractif (23) et une fibre optique d'émission et réception et **en ce que** tous les axes mécaniques (52) des logements (2, 2', 2") sont parallèles entre eux ; l'axe mécanique (52) de chacun des logements (2, 2', 2") correspondant à l'unique axe.

11. Système d'émission et réception (200) apte à être utilisé comme élément d'un LIDAR (100), comprenant une tête optique (1) selon l'une des revendications 1 à 10 et au moins un couple consistant en un système optique réfractif (23) et une fibre optique d'émission et réception, chaque couple définissant une ligne de visée et étant porté par la tête optique (1).

12. Système d'émission et réception (200) apte à être utilisé comme élément d'un LIDAR (100), comprenant une tête optique (1) selon la revendication 10 et au moins deux couples consistant chacun en un système optique réfractif (23) et une fibre optique d'émission et réception, chaque couple définissant une ligne de visée et étant porté par la tête optique (1), à chaque ligne de visée sauf une étant associé un prisme de déviation (17).

13. Système d'émission et réception (200) apte à être utilisé comme élément d'un LIDAR (100), comprenant une tête optique (1) selon la revendication 10 et au moins deux couples consistant chacun en un système optique réfractif (23) et une fibre optique d'émission et réception, chaque couple définissant une ligne de visée et étant porté par la tête optique (1), à chaque ligne de visée étant associé un prisme de déviation (17).

14. Procédé de fabrication d'une tête optique (1) selon l'une quelconque des revendications 1 à 10, **caractérisé par** les étapes suivantes :
- on découpe pour chaque logement (2, 2', 2") une longueur voulue d'un tube présentant une première composition en matériau composite rigide et athermique et on fixe à l'intérieur de chaque tube au moins un insert d'ajustement (4) métallique présentant une seconde composition plus facilement usinable que la première ;
- on usine au moins un parmi l'au moins un insert d'ajustement (4), de façon à affiner l'alignement de l'axe (51) d'un faisceau de sortie de la fibre optique d'émission et réception avec l'axe optique (50) du système optique réfractif (23) correspondant.

15. Procédé de fabrication d'une tête optique (1) selon l'une quelconque des revendications 1 à 10, **caractérisé par** les étapes suivantes :
- on réalise par mise en forme au moins un logement (2, 2', 2"), le logement (2, 2', 2") ainsi formé possédant une enveloppe externe (3) présentant une première composition en matériau composite rigide et athermique, à l'intérieur de laquelle se trouve au moins une partie formée comme un insert d'ajustement (4) et présentant une seconde composition plus facilement usinable que la première ;
- on usine au moins une parmi l'au moins une partie formée comme un insert d'ajustement (4), de façon à affiner l'alignement de l'axe (51) d'un faisceau de sortie de la fibre optique d'émission et réception avec l'axe optique (50) du système optique réfractif (23) correspondant.

16. Procédé de fabrication selon la revendication 14 ou 15, **caractérisé en ce qu'**il comprend ensuite les étapes suivantes :
- on positionne la tête optique (1) par rapport à un repère spatial prédéterminé,
- on usine au moins un parmi l'au moins un insert d'ajustement (4), de façon à affiner l'alignement d'un axe mécanique (52) d'un logement (2, 2', 2") par rapport à un axe de référence dans le repère spatial prédéterminé ; l'axe mécanique (52) correspondant à l'unique axe.

## Patentansprüche

1. Optischer Kopf (1) zur Durchführung einer atmosphärischen Messung, ausgelegt zur Aufnahme mindestens eines Paares aus einem refraktiven optischen System (23) und einer optischen Sende- und Empfangsfaser, wobei jedes Paar eine Sichtlinie definiert, das refraktive optische System (23) in einer Halterung (6) montiert ist und die optische Sende- und Empfangsfaser in einem optischen Verbinder (24) montiert ist, wobei der optische Kopf starr aus einem Stück gebildet ist und mindestens ein Gehäuse (2, 2', 2") zur Aufnahme mindestens des refraktiven optischen Systems (23) aufweist, wobei dieses Gehäuse (2, 2', 2") gebildet ist durch:
- eine Außenhülle (3), die eine erste Zusammensetzung aus einem starren und athermischen Verbundmaterial aufweist, in deren Inneren festgelegt ist
- mindestens ein metallischer Passungseinsatz (4), der eine Abstützung für die Halterung des refraktiven optischen Systems (23) bildet und eine zweite Zusammensetzung aufweist, die leichter zu bearbeiten ist als die erste Zusammensetzung,
**dadurch gekennzeichnet, dass** der mindestens eine Passungseinsatz (4), der eine Abstützung für die Halterung des refraktiven optischen Systems (23) bildet, bearbeitet ist, um:
- sicherzustellen, dass die optische Achse (50) des refraktiven optischen Systems (23) und die Achse (51) des Ausgangsstrahls der optischen Sende- und Empfangsfaser entlang einer gemeinsamen Achse zusammenfallen, die einer Sichtlinie des mindestens einen durch das refraktive optische System (23) und die optische Sende- und Empfangsfaser gebildeten Paares entspricht, und um die Positionierung dieser gemeinsamen Achse in Bezug auf eine Referenzachse zu gewährleisten, und um ein Gewinde auf seiner Innenseite (64) zu bilden, das eine Einstellung einer Positionierung des refraktiven optischen Systems (23) für die Fokussierung einer Brennweite des refraktiven optischen Systems (23) ermöglicht; wobei das Gewinde zur Aufnahme des refraktiven optischen Systems (23) vorgesehen ist.

2. Optischer Kopf (1) nach Anspruch 1, **dadurch gekennzeichnet, dass** die Außenhülle (3) aus Kohlefaser gebildet ist.

3. Optischer Kopf (1) nach Anspruch 1 oder 2, bei dem mindestens ein Gehäuse (2, 2', 2") zur Aufnahme mindestens der Sende- und Empfangsfaser ausgebildet ist, wobei dieses Gehäuse (2, 2', 2") gebildet ist durch:
- eine Außenhülle (3), die eine erste Zusammensetzung aus einem starren und athermischen Verbundmaterial aufweist, in deren Inneren fixiert ist
- mindestens ein metallischer Passungseinsatz (4), der eine Abstützung für den optischen Verbinder (24) der optischen Sende- und Empfangsfaser bildet und eine zweite Zusammensetzung aufweist, die leichter zu bearbeiten ist als die erste Zusammensetzung,
wobei der mindestens eine metallische Passungseinsatz (4), der eine Abstützung für den optischen Verbinder (24) der optischen Sende- und Empfangsfaser bildet, bearbeitet ist, um sicherzustellen, dass die optische Achse (50) des refraktiven optischen Systems (23) und die Achse (51) des Ausgangsstrahls der optischen Sende- und Empfangsfaser entlang der gemeinsamen Achse zusammenfallen, entsprechend der Sichtlinie des mindestens einen aus dem refraktiven optischen System (23) und der optischen Sende- und Empfangsfaser gebildeten Paares, und um die Positionierung dieser gemeinsamen Achse in Bezug auf die Referenzachse zu gewährleisten.

4. Optischer Kopf (1) nach Anspruch 3, **dadurch gekennzeichnet, dass** jedes Gehäuse (2") aus einem Rohr besteht, das die Außenhülle (3) bildet und beinhaltet:
- an einem ersten Ende einen ersten Passungseinsatz (4) zur Aufnahme der Halterung (6) des refraktiven optischen Systems (23), und
- an einem zweiten Ende einen zweiten Passungseinsatz (4) zur Aufnahme des optischen Verbinders (24) der optischen Sende- und Empfangsfaser.

5. Optischer Kopf (1) nach Anspruch 4, **dadurch gekennzeichnet, dass** jedes Gehäuse (2") aus einem Rohr besteht, das die Außenhülle (3) bildet, und dass jedes erste Rohrende an einer ersten Halteplatte (7) und jedes zweite Rohrende an einer zweiten Halteplatte (8) befestigt ist.

6. Optischer Kopf (1) nach Anspruch 3, **dadurch gekennzeichnet, dass** der optische Kopf aufweist:
- eine erste Gruppe von mindestens einem Gehäuse (2) zur Aufnahme jeweils eines refraktiven optischen Systems (23),
- eine zweite Gruppe von mindestens einem Gehäuse (2') zur Aufnahme jeweils einer optischen Sende- und Empfangsfaser,
wobei die Gehäuse (2, 2') vermittels eines starren und athermischen Verbundmaterials miteinander verbunden sind.

7. Optischer Kopf (1) nach einem der Ansprüche 1 bis 6, **dadurch gekennzeichnet, dass** er mindestens zwei Paare aus jeweils einem refraktiven optischen System (23) und einer optischen Sende- und Empfangsfaser aufweist, dass jedes Gehäuse (2, 2"), das ein refraktives optisches System (23) aufnimmt, eine mechanische Achse (52) besitzt, die der gemeinsamen Achse entspricht, und dass die mechanischen Achsen (52) der Gehäuse (2, 2"), die ein refraktives optisches System (23) aufnehmen, jeweils in eine andere Richtung und so orientiert sind, dass mindestens zwei der Gehäuse (2, 2"), die ein refraktives optisches System (23) aufnehmen, deren mechanische Achse (52) so orientiert besitzen, dass es keine Ebene gibt, die ihre mechanische Achse (52) und eine andere mechanische Achse (52) der Gehäuse (2, 2"), die ein refraktives optisches System (23) aufnehmen, beinhaltet.

8. Optischer Kopf (1) nach einem der Ansprüche 1 bis 7, **dadurch gekennzeichnet, dass** die ein refraktives optisches System (23) aufnehmenden Gehäuse (2, 2") fünf an der Zahl sind und jeweils eine mechanische Achse (52) besitzen, die der gemeinsamen Achse entspricht.

9. Optischer Kopf (1) nach Anspruch 8, **dadurch gekennzeichnet, dass** die fünf Gehäuse (2, 2"), die ein refraktives optisches System (23) aufnehmen, bestehen aus:
- vier Gehäusen (2, 2"), die ein refraktives optisches System (23) aufnehmen, verteilt um
- ein Gehäuse (2, 2"), das ein zentrales refraktives optisches System (23) aufnimmt,
und wobei die mechanischen Achsen (52) der vier Gehäuse (2, 2"), die ein refraktives optisches System (23) aufnehmen, spiralförmig angeordnet sind, d.h. dass diese mechanischen Achsen jeweils einen Umfang eines oberen Schnitts und einen Umfang eines unteren Schnitts eines Kegels (16) oder eines Zylinders schneiden.

10. Optischer Kopf (1) nach einem der Ansprüche 1 bis 6, **dadurch gekennzeichnet, dass** er mindestens zwei Paare aufweist, die jeweils aus einem refraktiven optischen System (23) und einer optischen Sende- und Empfangsfaser gebildet sind, und dass alle mechanischen Achsen (52) der Gehäuse (2, 2', 2") parallel zueinander sind, wobei die mechanische Achse (52) jedes der Gehäuse (2, 2', 2") der gemeinsamen Achse entspricht.

11. Sende- und Empfangssystem (200), das zur Verwendung als Teil eines LIDAR (100) ausgelegt ist, aufweisend einen optischen Kopf (1) nach einem der Ansprüche 1 bis 10 und mindestens ein Paar, das aus einem refraktiven optischen System (23) und einer optischen Sende- und Empfangsfaser gebildet ist, wobei jedes Paar eine Sichtlinie definiert und von dem optischen Kopf (1) getragen wird.

12. Sende- und Empfangssystem (200), das zur Verwendung als Teil eines LIDAR (100) ausgebildet ist, aufweisend einen optischen Kopf (1) nach Anspruch 10 und mindestens zwei Paare, die jeweils aus einem refraktiven optischen System (23) und einer optischen Sende- und Empfangsfaser gebildet sind, wobei jedes Paar eine Sichtlinie definiert und von dem optischen Kopf (1) getragen wird, wobei jeder Sichtlinie außer einer ein Umlenkprisma (17) zugeordnet ist.

13. Sende- und Empfangssystem (200), das zur Verwendung als Teil eines LIDAR (100) ausgelegt ist, aufweisend einen optischen Kopf (1) nach Anspruch 10 und mindestens zwei Paare, die jeweils aus einem refraktiven optischen System (23) und einer optischen Sende- und Empfangsfaser gebildet sind, wobei jedes Paar eine Sichtlinie definiert und von dem optischen Kopf (1) getragen wird, wobei jeder Sichtlinie ein Umlenkprisma (17) zugeordnet ist.

14. Verfahren zur Herstellung eines optischen Kopfes (1) nach einem der Ansprüche 1 bis 10, **gekennzeichnet durch** die folgenden Schritte:
- Zuschneiden für jedes Gehäuse (2, 2', 2") einer gewünschten Länge eines Rohres, das eine erste Zusammensetzung aus einem starren und athermischen Verbundmaterial aufweist, und Befestigen mindestens eines metallischen Passungseinsatzes (4), der eine zweite Zusammensetzung aufweist, die leichter zu bearbeiten ist als die erste, im Inneren jedes Rohres;
- Bearbeiten mindestens eines des mindestens einen Passungseinsatzes (4) derart, dass die Ausrichtung der Achse (51) eines Ausgangsstrahls der optischen Sende- und Empfangsfaser mit der optischen Achse (50) des entsprechenden refraktiven optischen Systems (23) verbessert wird.

15. Verfahren zur Herstellung eines optischen Kopfes (1) nach einem der Ansprüche 1 bis 10, **gekennzeichnet durch** die folgenden Schritte:
- Bilden mindestens eines Gehäuses (2, 2', 2") durch Formen, wobei das so gebildete Gehäuse (2, 2', 2") eine Außenhülle (3) aufweist, die eine erste Zusammensetzung aus einem starren und athermischen Verbundmaterial aufweist, in deren Inneren sich mindestens ein Teil befindet, das als Passungseinsatz (4) ausgebildet ist und eine zweite Zusammensetzung aufweist, die leichter zu bearbeiten ist als die erste;
- Bearbeiten mindestens eines des mindestens einen als Passungseinsatz (4) ausgebildeten Teils derart, dass die Ausrichtung der Achse (51) eines Ausgangsstrahls der optischen Sende- und Empfangsfaser mit der optischen Achse (50) des entsprechenden refraktiven optischen Systems (23) verbessert wird.

16. Herstellungsverfahren nach Anspruch 14 oder 15, **dadurch gekennzeichnet, dass** es ferner die folgenden Schritte umfasst:
- Positionieren des optischen Kopfes (1) in Bezug auf einen vorbestimmten räumlichen Bezugsrahmen,
- Bearbeiten mindestens eines des mindestens einen Passungseinsatzes (4) derart, dass die Ausrichtung einer mechanischen Achse (52) eines Gehäuses (2, 2', 2") in Bezug auf eine Referenzachse in dem vorbestimmten räumlichen Bezugsrahmen verbessert wird; wobei die mechanische Achse (52) der gemeinsamen Achse entspricht.

## Claims

1. Optical head (1) for carrying out an atmospheric measurement, capable of receiving at least one pair consisting of a refractive optical system (23) and an optical fiber for transmission and reception, each pair defining a line of sight, the refractive optical system (23) being mounted in a mount (6) and the optical fiber for transmission and reception being mounted in an optical connector (24), the optical head being formed rigidly in a single piece and comprising at least one housing (2, 2', 2") for receiving at least the refractive optical system (23), this housing (2, 2', 2") being formed by:
- an outer shell (3) having a first composition made from rigid and athermal composite material, inside which is fixed
- at least one metallic adjustment insert (4) forming a support for the mount of the refractive optical system (23), having a second composition that can be more easily machined than the first composition,
**characterized in that** the at least one adjustment insert (4) forming a support for the mount of the refractive optical system (23) is machined in order to:
- ensure that the optical axis (50) of the refractive optical system (23) and the axis (51) of the output beam of the optical fiber for transmission and reception are merged along a single axis, corresponding to a line of sight of the at least one pair formed by the refractive optical system (23) and the optical fiber for transmission and reception, and in order to ensure the positioning of this single axis with respect to a reference axis, and to form a thread on its inner face (64) making it possible to adjust a positioning of the refractive optical system (23) for setting a focal length of the refractive optical system (23); the thread being intended to receive the refractive optical system (23).

2. Optical head (1) according to claim 1, **characterized in that** the outer shell (3) is made from carbon fiber.

3. Optical head (1) according to claim 1 or 2, in which at least one housing (2, 2', 2") is arranged to receive at least the fiber for transmission and reception, this housing (2, 2', 2") being formed by:
- an outer shell (3) having a first composition made from rigid and athermal composite material, inside which is fixed
- at least one metallic adjustment insert (4) forming a support for the optical connector (24) of the optical fiber for transmission and reception, having a second composition that can be more easily machined than the first composition,
the at least one metallic adjustment insert (4) forming a support for the optical connector (24) of the optical fiber for transmission and reception is machined in order to ensure that the optical axis (50) of the refractive optical system (23) and the axis (51) of the output beam of the optical fiber for transmission and reception are merged along a single axis, corresponding to the line of sight of the at least one pair formed by the refractive optical system (23) and the optical fiber for transmission and reception, and in order to ensure the positioning of this single axis with respect to the reference axis.

4. Optical head (1) according to claim 3, **characterized in that** each housing (2") consists of a tube forming the outer shell (3) and comprising:
- at a first end, a first adjustment insert (4) for receiving the mount (6) of the refractive optical system (23), and
- at a second end, a second adjustment insert (4) for receiving the optical connector (24) of the optical fiber for transmission and reception.

5. Optical head (1) according to claim 4, **characterized in that** each housing (2") consists of a tube forming the outer shell (3), and **in that** each first end of the tube is fixed to a first support plate (7) and each second end of the tube is fixed to a second support plate (8).

6. Optical head (1) according to claim 3, **characterized in that** the optical head comprises:
- a first series of at least one housing (2) for each receiving a refractive optical system (23),
- a second series of at least one housing (2') for each receiving an optical fiber for transmission and reception,
the housings (2, 2') being connected to one another via a rigid and athermal composite material.

7. Optical head (1) according to any one of claims 1 to 6, **characterized in that** it comprises at least two pairs each consisting of a refractive optical system (23) and an optical fiber for transmission and reception, **in that** each housing (2, 2") receiving a refractive optical system (23) has a mechanical axis (52) corresponding to the single axis, and **in that** the mechanical axes (52) of the housings (2, 2") receiving a refractive optical system (23) are each oriented in a different direction and in such a way that at least two of the housings (2, 2") receiving a refractive optical system (23) have their mechanical axis (52) oriented in such a way that there is no plane comprising their mechanical axis (52) and another mechanical axis (52) of the housing (2, 2") receiving a refractive optical system (23).

8. Optical head (1) according to any one of claims 1 to 7, **characterized in that** the number of housings (2, 2") receiving a refractive optical system (23) is five, each having a mechanical axis (52) corresponding to the single axis.

9. Optical head (1) according to claim 8, **characterized in that** the five housings (2, 2") receiving a refractive optical system (23) are composed of:
- four housings (2, 2") receiving a refractive optical system (23), distributed around
- a housing (2, 2") receiving a central refractive optical system (23)
and the mechanical axes (52) of the four housings (2, 2") receiving a refractive optical system (23) are arranged in a spiral, i.e. these mechanical axes are each secant to a perimeter of an upper cross-section and a perimeter of a lower cross-section of a cone (16) or of a cylinder.

10. Optical head (1) according to any one of claims 1 to 6, **characterized in that** it comprises at least two pairs each consisting of a refractive optical system (23) and an optical fiber for transmission and reception, and **in that** all the mechanical axes (52) of the housings (2, 2', 2") are parallel to one another; the mechanical axis (52) of each of the housings (2, 2', 2") corresponding to the single axis.

11. Emitting and receiving system (200) capable of being used as an element of a LIDAR (100), comprising an optical head (1) according to one of claims 1 to 10 and at least a pair consisting of a refractive optical system (23) and an optical fiber for transmission and reception, each pair defining a line of sight and being borne by the optical head (1).

12. System for transmission and reception (200) capable of being used as an element of a LIDAR (100), comprising an optical head (1) according to claim 10 and at least two pairs each consisting of a refractive optical system (23) and an optical fiber for transmission and reception, each pair defining a line of sight and being borne by the optical head (1), to each line of sight except one being associated with a deflection prism (17).

13. System for transmission and reception (200) capable of being used as an element of a LIDAR (100) comprising an optical head (1) according to claim 10 and at least two pairs each consisting of a refractive optical system (23) and an optical fiber for transmission and reception, each pair defining a line of sight and being borne by the optical head (1), to each line of sight being associated with a deflection prism (17).

14. Method for manufacturing an optical head (1) according to any one of claims 1 to 10, **characterized by** the following steps:
- cutting, for each housing (2, 2', 2"), a desired length of a tube having a first composition made from rigid and athermal composite material and fixing to the inside of each tube at least one metallic adjustment insert (4) having a second composition that can be more easily machined than the first;
- machining at least one of the at least one adjustment insert (4) so as to refine the alignment of the axis (51) of an output beam of the optical fiber for transmission and reception with the optical axis (50) of the corresponding refractive optical system (23).

15. Method for manufacturing an optical head (1) according to any one of claims 1 to 10, **characterized by** the following steps:
- shaping at least one housing (2, 2', 2"), the housing (2, 2', 2") thus formed having an outer shell (3) having a first composition made from a rigid and athermal composite material, inside which is located at least one part formed as an adjustment insert (4) and having a second composition that can be more easily machined than the first;
- machining at least one of the at least one part formed as an adjustment insert (4) so as to refine the alignment of the axis (51) of an output beam of the optical fiber for transmission and reception with the optical axis (50) of the corresponding refractive optical system (23).

16. Manufacturing method according to claim 14 or 15, **characterized in that** it then comprises the following steps:
- positioning the optical head (1) with respect to a predetermined spatial reference system,
- machining at least one of the at least one adjustment insert (4) so as to refine the alignment of a mechanical axis (52) of a housing (2, 2', 2") with respect to a reference axis in the predetermined spatial reference system; the mechanical axis (52) corresponding to the single axis.
